# EUROPEAN PATENT APPLICATION

(11) **EP 4 825 673 A1**
(43) Date of publication of application: **21.10.2026**
(21) Application number: 25178027.6
(22) Date of filing: 21.05.2025
(51) Int. Cl.: B60S 1/54, B60S 1/56, G02B 27/00, H04N 23/50

(54) **AUTOMOTIVE LENS SELF-CLEANING MODULE**

(30) Priority: 18.04.2025 CN 202520742017 U
(71) Applicant: Koge Micro Tech Co., Ltd., New Taipei City 235 (TW)
(72) Inventor: CHANG, TSUNG-TA, New Taipei City 235 (TW)
(74) Representative: Cabinet Chaillot

(57) **Abstract**

An automotive lens self-cleaning module includes an air pump, a connecting tube, a nozzle, and a fixing device. The air pump is used to generate an air jet. The connecting tube is flexibly bendable. The connecting tube is connected between the air pump and the nozzle. The fixing device is used to fix the nozzle and an automotive lens tightly together. When the air pump outputs air, generation of the air jet may be manually operated through an automotive control panel or automatically activated by a smart control system. The air output by the air pump is delivered through the connecting tube to the nozzle, and the nozzle is adjusted to different directions in order to clean the automotive lens.

## Description

### BACKGROUND OF THE INVENTION

### Technical Field

The present invention relates to an automotive lens self-cleaning module. More particularly, the invention relates to cleaning an automotive lens with a nozzle that is connected to an air pump through a connecting tube and that is adjusted to different directions in order to carry out the cleaning operation.

### Description of Related Art

If a camera lens of a vehicle is provided with an automatic cleaning module, the lens can be cleaned by the module regardless of whether the vehicle is running or not. The nozzle device of the automatic cleaning module can be further integrated with the water spraying system for the windshield of the vehicle so that the camera lens not only can be washed alone, but also can be washed at the same time as the windshield each time the latter is washed.

Through the design of the automotive lens self-cleaning module, the camera lens can be cleaned at any time by using the nozzle device, thereby allowing the driver to maintain a clear field of view. At the same time, the driver no longer needs to manually clean the camera lens in the traditional way, which reduces the risk of lens damage caused by manual cleaning.

Therefore, how to achieve optimal cleaning performance by improving the structural design and integrating a more efficient automotive lens self-cleaning module has become an important issue to be addressed in this technical field.

### BRIEF SUMMARY OF THE INVENTION

The technical features of the improvement provided by the present invention are as follows: An air pump is used to generate an air jet either through manual operation via an automotive control panel or upon automatic activation by a smart control system, the air output by the air pump is delivered through a connecting tube to a nozzle, and the nozzle is adjusted to various directions in order to clean an automotive lens.

The present invention provides an automotive lens self-cleaning module characterized by including: an air pump that is used to generate an air jet; a connecting tube that is flexibly bendable; a nozzle provided in such a way that the connecting tube is connected between the air pump and the nozzle; and a fixing device that is used to fix the nozzle and an automotive lens tightly together. When the air pump outputs air, generation of the air jet may be manually operated through an automotive control panel or automatically activated by a smart control system. The air output by the air pump is delivered through the connecting tube to the nozzle, and the automotive lens is cleaned by adjusting the nozzle to different directions.

### BRIEF DESCRIPTION OF THE SEVERAL VIEWS OF THE DRAWINGS

The structure and the technical means adopted by the present invention to achieve the above and other objects can be best understood by referring to the following detailed description of the preferred embodiments and the accompanying drawings, wherein:
FIG. 1 is an exploded perspective view of the automotive lens self-cleaning module according to the first embodiment of the present invention.
FIG. 2 is an assembled perspective view of the automotive lens self-cleaning module according to the first embodiment of the present invention.
FIG. 3 is an exploded perspective view of the automotive lens self-cleaning module according to the second embodiment of the present invention.
FIG. 4 is an assembled perspective view of the automotive lens self-cleaning module according to the second embodiment of the present invention.

### DETAILED DESCRIPTION OF THE INVENTION

Some modes of implementing the present invention are disclosed and described below by way of specific embodiments so that a person skilled in the art can understand the advantages and effects of the invention from the contents disclosed in this specification. It should be understood, however, that the invention can be implemented or used in ways other than those of the disclosed embodiments, and that the details stated in the specification can be modified or changed according to different viewpoints or applications without departing from the concept of the invention. In addition, the accompanying drawings of the invention are only simple schematic drawings and are not drawn to scale. Furthermore, while the following modes of implementation are used to expound the technical contents of the invention, the contents disclosed herein are not intended to be restrictive of the scope of the patent protection sought by the applicant.

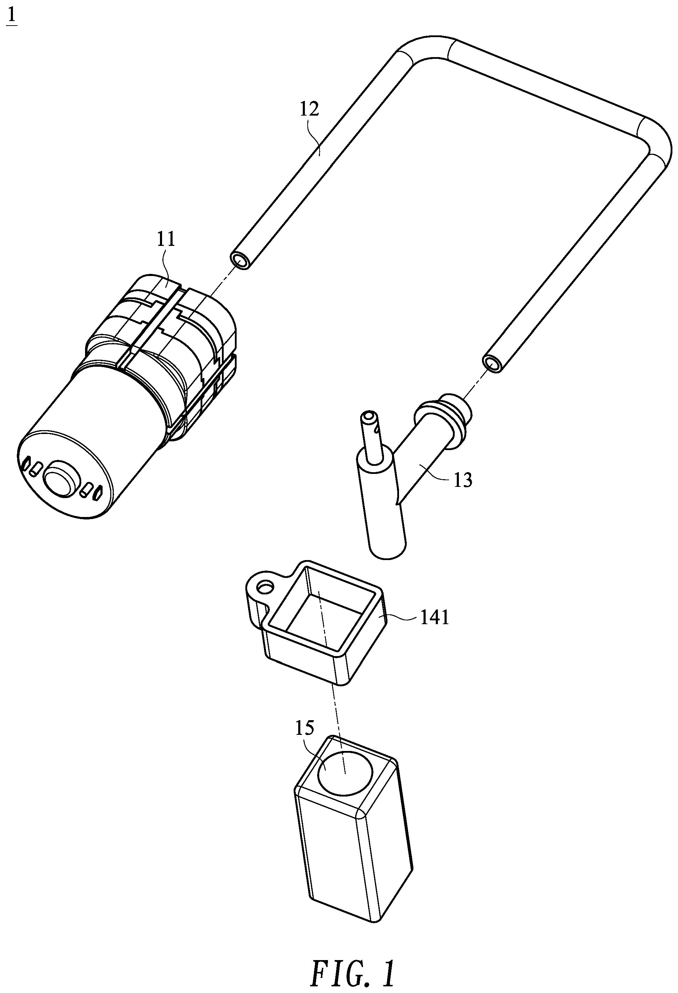

Referring to FIG. 1 to FIG. 4, the present invention provides an automotive lens self-cleaning module 1 that includes an air pump 11, a connecting tube 12, a nozzle 13, and a fixing device 141 or 142.

### [First embodiment]

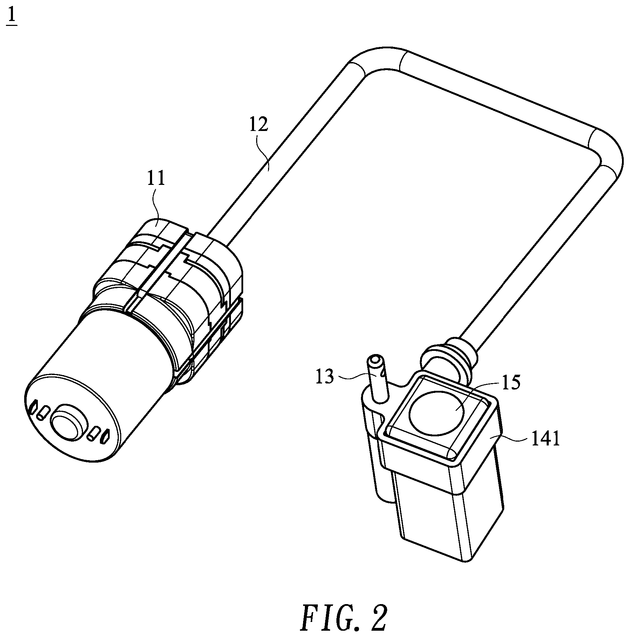

Referring to FIG. 1 and FIG. 2, this embodiment provides an automotive lens self-cleaning module 1 that includes an air pump 11, a connecting tube 12, a nozzle 13, and a first fixing device 141. The air pump 11 is used to generate an air jet. The connecting tube 12 can be flexibly bent. The connecting tube 12 is connected between the air pump 11 and the nozzle 13. The first fixing device 141 is used to fix the nozzle 13 and a rectangular automotive lens 15 tightly together.

More specifically, the air pump 11 is equipment for pumping air, such as a turbofan. When the air pump 11 outputs air, the generation of an air jet may be manually operated through an automotive control panel or automatically activated by a smart control system. The air output by the air pump 11 is delivered to the nozzle 13 through the connecting tube 12, which is made of a hose material such as plastic or rubber, and the nozzle 13 is adjusted to different directions in order to clean the automotive lens 15.

The first fixing device 141 is a pliable fixing ring, is elastic, and can be freely bent. The first fixing device 141 may be rectangular, triangular, circular, or of any other geometric shape. The first fixing device 141 can be fine-tuned in shape according to the size and shape of the automotive lens 15 in order to be fixedly mounted on the automotive lens 15, thereby ensuring that the automotive lens self-cleaning module 1 is secure. Thanks to the design of the first fixing device 141, the self-cleaning module 1 has the flexibility of being mounted on automotive lenses of various types.

In this embodiment, the automotive lens self-cleaning module 1 is mounted on a rectangular automotive lens 15. The first fixing device 141 is designed as a three-dimensional rectangular hollow fixing ring. During assembly, the elastic and flexibly bendable properties of the first fixing device 141 allow the rectangular automotive lens 15 to be tightly received and mounted within the interior of the first fixing device 141.

As described in the purpose of the present invention, the externally variable shape of the first fixing device 141 allows it to flexibly adapt to different sizes and shapes of automotive lenses. The first fixing device 141 can be fine-tuned at any time to be securely mounted around the exterior of the rectangular automotive lens 15, thereby achieving the corresponding fine adjustment and fixation. This ensures the tight installation of the automotive lens module and allows the first fixing device 141 to be freely mounted on various types of automotive lenses.

### [Second embodiment]

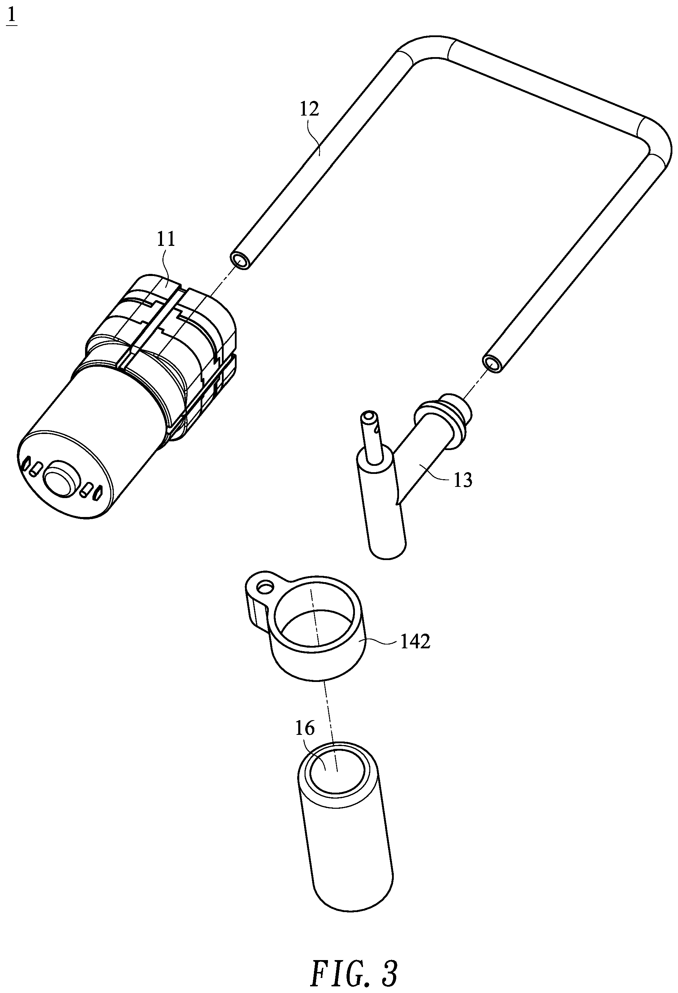

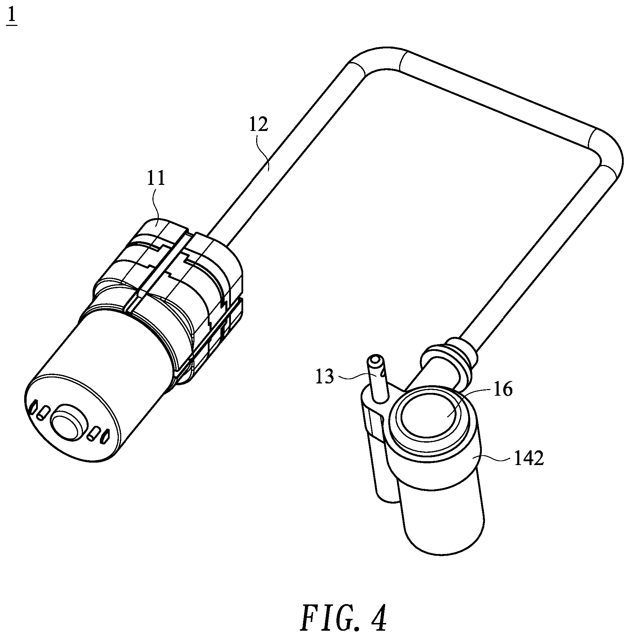

Referring to FIG. 3 and FIG. 4, this embodiment provides an automotive lens self-cleaning module 1 that includes an air pump 11, a connecting tube 12, a nozzle 13, and a second fixing device 142. Unlike the first embodiment, the second embodiment is an embodiment where the automotive lens self-cleaning module 1 is to be mounted on a circular automotive lens 16. The second fixing device 142 in the second embodiment is elastic and can be freely bent. As the automotive lens 16 is circular, the second fixing device 142 is in the shape of a hollow circular tube. To assemble, the circular lens 16 is mounted into the hollow circular-tube-shaped second fixing device 142, and then the nozzle 13 is fine-tuned to aim at the lens 16.

When the automotive lens self-cleaning module 1 is activated, the air jet is initiated either manually via the automotive control panel or automatically via a smart control system. The air is generated by the air pump 11, delivered through the connecting tube 12 to the nozzle 13, and finally, the nozzle 13 is adjusted to aim at the circular automotive lens 16 in a 360-degree omnidirectional manner, thereby completing the cleaning operation of the circular automotive lens 16.

In summary, as described in the purpose of the present invention, the externally variable shape of the second fixing device 142 allows it to flexibly adapt to different sizes and shapes of automotive lenses. Whether the lens is rectangular, triangular, circular, or any geometric variation, the second fixing device 142 of the present invention can be fine-tuned to achieve a corresponding tight and secure installation. This ensures the stability of the automotive lens module and enables the automotive lens self-cleaning module 1 to be flexibly mounted on various types of automotive lenses.

The above description is only the preferred embodiments of the present invention, and is not intended to limit the present invention in any form. Although the invention has been disclosed as above in the preferred embodiments, they are not intended to limit the invention. A person skilled in the relevant art will recognize that equivalent embodiment modified and varied as equivalent changes disclosed above can be used without parting from the scope of the technical solution of the present invention. All the simple modification, equivalent changes and modifications of the above embodiments according to the material contents of the invention shall be within the scope of the technical solution of the present invention.

## Claims

1. An automotive lens self-cleaning module, **characterized by** comprising:
an air pump, the air pump being used to generate an air jet;
a connecting tube that is flexibly bendable;
a nozzle provided in such a way that the connecting tube is connected between the air pump and the nozzle; and
a fixing device, the fixing device being used to fix the nozzle and an automotive lens tightly together;
wherein when the air pump outputs air, generation of the air jet is manually operated via an automotive control panel or is automatically activated by a smart control system, the air output by the air pump is delivered through the connecting tube to the nozzle, and the nozzle is adjusted to different directions in order to clean the automotive lens.

2. The automotive lens self-cleaning module of claim 1, **characterized in that** the air pump is air pumping equipment selected from the group consisting of a turbofan.

3. The automotive lens self-cleaning module of claim 1, **characterized in that** the connecting tube is made of a hose material.

4. The automotive lens self-cleaning module of claim 3, **characterized in that** the hose material of the connecting tube is plastic or rubber.

5. The automotive lens self-cleaning module of claim 1, **characterized in that** the fixing device is a pliable fixing ring and is elastic.

6. The automotive lens self-cleaning module of claim 1, **characterized in that** the fixing device is of a geometric shape selected from the group consisting of a rectangular shape, a triangular shape, and a circular shape and is able to be fine-tuned in shape according to a size and a shape of the automotive lens in order to be fixedly mounted on the automotive lens to ensure that the module is secure.

7. The automotive lens self-cleaning module of claim 1, **characterized in that** the fixing device is mounted around a lens device of an automobile.

## Amended claims

### Amended claims in accordance with Rule 137(2) EPC.

1. An automotive lens self-cleaning module (1), comprising:
an air pump (11), the air pump (11) being used to generate an air jet;
a connecting tube (12) that is flexibly bendable;
a nozzle (13) provided in such a way that the connecting tube (12) is connected between the air pump (11) and the nozzle (13); and
a fixing device (141, 142), the fixing device (141, 142) being used to fix the nozzle (13) and an automotive lens (15) tightly together;
wherein when the air pump (11) outputs air, generation of the air jet is manually operated via an automotive control panel or is automatically activated by a smart control system, and the air output by the air pump (11) is delivered through the connecting tube (12) to the nozzle (13),
**characterized in that** the nozzle (13) is adjusted to different directions in a 360-degree omnidirectional manner in order to clean the automotive lens (15).

2. The automotive lens self-cleaning module (1) of claim 1, **characterized in that** the air pump (11) is air pumping equipment selected from the group consisting of a turbofan.

3. The automotive lens self-cleaning module (1) of claim 1, **characterized in that** the connecting tube (12) is made of a hose material.

4. The automotive lens self-cleaning module (1) of claim 3, **characterized in that** the hose material of the connecting tube (12) is plastic or rubber.

5. The automotive lens self-cleaning module (1) of claim 1, **characterized in that** the fixing device (141, 142) is a pliable fixing ring and is elastic.

6. The automotive lens self-cleaning module (1) of claim 1, **characterized in that** the fixing device (141, 142) is of a geometric shape selected from the group consisting of a rectangular shape, a triangular shape, and a circular shape and is able to be fine-tuned in shape according to a size and a shape of the automotive lens (15) in order to be fixedly mounted on the automotive lens (15) to ensure that the module is secure.

7. The automotive lens self-cleaning module (1) of claim 1, **characterized in that** the fixing device (141, 142) is mounted around a lens device of an automobile.
